# EUROPEAN PATENT SPECIFICATION

(11) **EP 2 850 365 B1**
(45) Date of publication and mention of the grant of the patent: **25.04.2018**
(21) Application number: 13790273.0
(22) Date of filing: 14.05.2013
(51) Int. Cl.: F23C 13/02, F23R 3/40, B60H 1/22, F23C 13/06

(54) **CATALYTIC HEATER AND REACTOR FOR OPERATING CATALYTIC COMBUSTION OF LIQUID FUELS**
KATALYTISCHE HEIZVORRICHTUNG AND REAKTOR ZUM BETRIEB EINER KATALYTISCHEN VERBRENNUNG FLÜSSIGER BRENNSTOFFE
APPAREIL DE CHAUFFAGE CATALYTIQUE, ET RÉACTEUR DESTINÉ À EFFECTUER LA COMBUSTION CATALYTIQUE DE COMBUSTIBLES LIQUIDES

(30) Priority: 15.05.2012 SE 1250495
(43) Date of publication of application: 25.03.2015
(73) Proprietor: Reformtech Heating Holding AB, 164 40 Kista (SE)
(72) Inventor: LINDSTRÖM, Bård, S-121 53 Johanneshov (SE); HAGSTRÖM, Daniel, S-182 75 Stocksund (SE)
(74) Representative: Brann AB
(86) International application number: PCT/SE2013/050534
(87) International publication number: WO 2013/172770

(56) References cited:
- WO-A1-03/072919
- WO-A1-03/102407
- DE-A1- 4 230 686
- DE-A1-102008 001 815
- JP-A- H 062 850
- SE-C2- 530 775
- US-A- 5 158 448
- US-A1- 2003 126 863
- US-A1- 2004 255 588

## Description

The present invention relates to a system for utilizing liquid fuels, such as diesel and gasoline, in a catalytic reactor for producing clean heat from the said fuel.

### Background

Conventional fuel fired heaters utilizes flame combustion for producing heat, a process that is associated with the generation of both particles (soot, ash) and chemical emissions (CO, NOx) that are all harmful to the environment.

By replacing the flame combustion system with a catalytic oxidation system it is possible to eliminate fuel related emissions and at the same time increase the efficiency of the process by lowering the temperature of the oxidation process (through increased air flow). A primary feature of catalytic oxidation is that the process is not limited to a low air-to-fuel ratio, which results in complete oxidation of all hydrocarbons and lower temperatures in the reaction zone to a level at which NOx production is hindered.

A major challenge with a catalytic heater operating on a multi component liquid fuel, such as diesel or gasoline, is to start the heater in a cold environment without producing soot that can poison the catalyst, reduce the operating life of the heater and increase service cost for the end users.

The problems associated with starting-up a liquid fuel catalytic combustor has resulted in an industrial focus on gaseous fuels, such as natural gas and propane, for practical applications of catalytic combustion, as seen in US-6,223,537, where natural gas is used to fuel the combustor. JP H06 2850 A discloses a catalytic heater according to the preamble of claim 1.

### Summary of the Invention

While the concept of catalytic combustion is not new, the present invention describes a novel method for using a diesel/gasoline type fuel in a catalytic heater that prevents the formation of soot in the catalytic reactor and decreases the starting time of the heater.

Therefore, the object of the invention is to solve the problems associated with starting a catalytic combustor and using a liquid fuel in a catalytic combustor.

Thus, the inventors have devised a catalytic reactor system as defined in claim 1.

The reactor according to the invention is a compact catalytic combustor system for use in, but not limited to, applications as compartment heaters in heavy duty trucks, passenger cars, boats and residential housing where clean heat is required to meet customer and legislative requirements.

In particular a dual reaction chamber solution has been developed in which the primary start-up section is separated from the catalytic reaction zone to prevent soot contamination of the catalyst during start-up as well as to shield the catalyst from thermal shock during cold start of the system, in particular the start-up or pre-heating section is provided in a separate compartment, connected to the reaction section via a channel.

The reactor system is also constructed with a primary and secondary fuel nozzle in the reactor, operating at a common pressure allowing the system to operate at wide variable fuel power during start-up and normal operation - allowing for optimal fuel flow in both the start-up sequence and during normal operation of the catalytic heater.

The air is supplied to the reactor both for cooling components in the system, as well as for pre-heating the air before transporting the air to the catalytic reactor zone in the heater, allowing for thermal stabilization of the fuel evaporation process in the catalytic reactor and prevention of thermal aging of the catalyst due to fuel evaporation on the catalyst surface.

### Brief Description of the Drawings

Figure 1 shows a prior art system;
Figure 2a schematically illustrates the a prior art catalytic reactor;
Figure 2b schematically illustrates the novel concept; and
Figure 3 illustrates an embodiment of the novel catalytic reactor.

### Detailed Description

For the purpose of this application, the following terms will have the indicated meanings

"Multi component fuel" is a commercially available fuel, such as diesel and gasoline that is a mixture of different hydrocarbons with varying boiling points, carbon-chain lengths and structure.

The use of these commonly available commercial fuels has been limited in catalytic combustion systems as it is complicated to completely evaporate the heavy components of the fuels without producing coke, through pyrolysis, from the lighter components in the fuel as well as the production of soot during light-off of the catalyst at low temperatures.

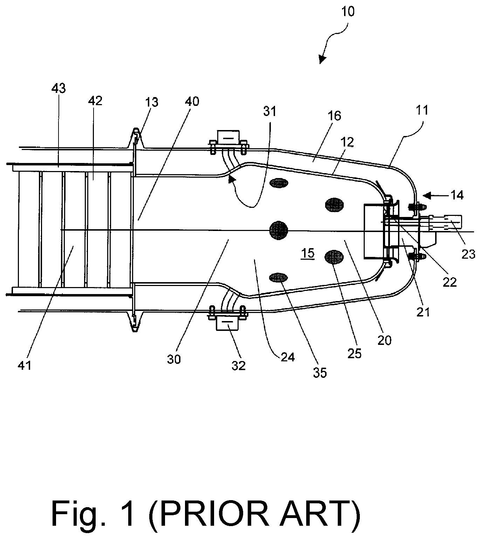

Referring to the drawings, in Fig. 1 a prior art system (according to US-6,223,537 is disclosed. It comprises a combustor 10 which has a generally double-walled, can-shaped configuration. The combustor 10 includes a combustor can 11, an inner liner 12 and an upstream end 14. The combustor can 11 surrounds the inner liner 12, and the inner liner 12 surrounds the chamber 15. The combustor can 11 and inner liner 12 do not contact one another but rather define a channel 16 through which air from a compressor section (not shown) flows before entering the chamber 15. In the embodiment shown in the drawings, the inner liner 12 is supported within the combustor can 11 by a perforated flange 13. The inner liner 12 may also be supportably attached to fuel nozzles 32, preferably in a loose-fitting manner to allow for thermal expansion.

Moving sequentially downstream, the combustor 10 includes a premix duct 30, a catalyst inlet 40, and a catalyst bed 41. In the embodiment shown in the drawings, at its downstream end, the inner liner 12 is approximately adjacent the upstream end of the catalyst bed 41, and the supporting structure for the catalyst bed 41 is engaged by the flange 13 for coaxial alignment with the inner liner 12. The catalyst bed 41 opens into a turbine section (not shown), which typically includes a turbine inlet and turbine wheel (not shown). In an alternative embodiment, the catalyst bed 41 is not in coaxial alignment with the inner liner 12, but is angled with respect to the axis of the inner liner 12 as may be appropriate for a given application.

The preheater 20 is a type of diffusion-flame burner that is of conventional construction, utilizing at least one preheater fuel nozzle 21 surrounded by one or more air swirlers 22 that serve to introduce air and stabilize the flame when the combustor is operating in a preheater mode. In the best mode of practicing the present invention, a single preheater fuel nozzle is used and is positioned parallel to an axis of the combustor, extending from the upstream end 14, and has its outlet surrounded by an axial air swirler. When liquid fuel is used, the at least one preheater fuel nozzle is preferably of the pressure or airblast type. The preheater also includes an igniter 23 for igniting the air and fuel that is to be combusted. In alternative embodiments, spark plugs, glow plugs, torches or other means for igniting a diffusion flame burner are employed in place of the igniter 23.

Catalytic combustion is possible only when the combustor inlet temperature exceeds a minimum value that is a function of the catalyst formulation. This is typically about 700 F. Thus the preheater is required for engine starting and for accelerating the engine to the speed necessary to obtain an adequate combustor inlet temperature. Once this condition has been reached, the preheater can be shut off. At this point a separate fuel delivery system 32 is used to introduce fuel into the premix duct 30, where the fuel is evaporated (if liquid rather than gaseous fuel is used) and mixed with the incoming air. The resulting fuel-air mixture is then introduced into the catalyst bed 41.

The combustor 10 also includes a plurality of primary air orifices 25 and a plurality of secondary air orifices 35 in the inner liner 12 downstream of the preheater fuel nozzle 21 and air swirlers 22. The primary air orifices 25 introduce additional air into the preheater 20 to enhance combustion in the preheater mode of operation. In a preferred embodiment, there are six primary air orifices circumferentially spaced around the inner liner 12. The air entering the preheater 20 through the primary air orifices 25 further stabilizes the flame by recirculating towards the preheater fuel nozzle 21, while also diluting the reacting fuel-air mixture to a level appropriate for relatively low NOx and soot production.

Downstream of the primary air orifices 25, a plurality of secondary air orifices 35 further reduces the reaction temperature and provides mixing of the fuel-air charge. It is desirable that the temperature reduction and the mixing of the fuel-air charge are sufficient to prevent damage to the catalyst and to minimize wear on the catalyst during preheater operation. In a preferred embodiment, there are twelve secondary air orifices spaced circumferentially around the inner liner 12, and the secondary orifices have a generally racetrack shape with the longer dimension oriented parallel to the axis of the inner liner 12.

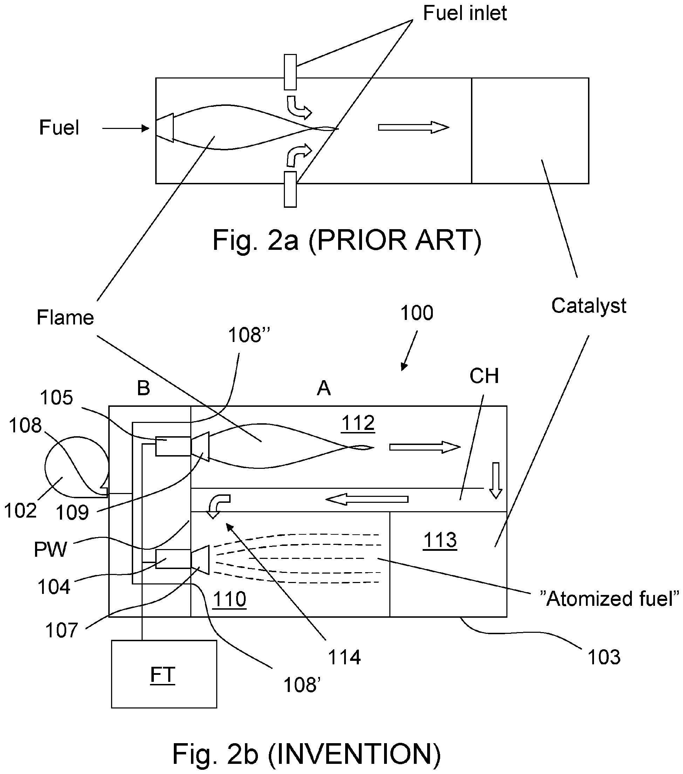

As pointed out in US-6,223,537 it is important to prevent damage to the catalyst. However, with the design shown in Fig. 1 it is virtually impossible to avoid that soot will be deposited inside the inner liner 12 at the catalyst inlet 40, and to some extent also in the catalyst 41. Therefore, the inventors devised the present invention that now will be described with reference to Fig. 2

In Figs. 2a and 2b a schematic illustration is given of the prior art device and of the invention, respectively.

Thus, as can be seen in Fig. 2a there is provided only one fuel nozzle that is used for providing an initial flame so as to pre-heat the system, and separate fuel nozzles for feeding fuel once the pre-heating flame is shut off. The pre-heating nozzle is arranged in-line with the catalyst.

In Fig. 2b an embodiment of the present system is shown schematically. Here there is provided a pre-heating chamber 112 separated from the catalytic reaction chamber, and in particular the pre-heating chamber is arranged in thermal contact with the reaction chamber. The hot gases during pre-heating are fed to the reaction chamber via a turbulator arranged as an inlet to the reaction chamber.

Thus, a catalytic reactor system is shown schematically and generally designated with reference 100.

It comprises a reactor housing 103, preferably made of steel. The reactor housing is subdivided in two main compartments A, B, one reactor compartment A in which the reactions take place and which in turn is subdivided in three sub-compartments 110, 112, 113 (to be described) and one control compartment B housing valves and other control devices.

The reaction compartment A comprises a pre-heating chamber 112, a mixing reactor chamber 110, and a catalyst 113 which forms its own compartment by virtue of its own inherent structural constitution. The catalyst is preferably of the honeycomb type, and can be metallic or ceramic.

The control compartment B is separated from the reactor compartment A by a partition wall PW. The control compartment communicates with the reactor compartment via at least one orifice 108 through which air can be supplied to the pre-heating chamber 112 via nozzles 108', 108". For supplying the air there is provided an air delivery means, such as a fan or a compressor 102, connected to the control compartment, suitably attached directly to the reactor housing, although it could be a separate unit connected to the reactor via pipes or tubes.

Inside the control compartment B there are provided valves. A primary fuel valve 104 is provided for supplying fuel to the mixing reactor chamber 110, and a secondary valve 105 is provided for supplying fuel to the pre-heating chamber 112. Both valves are connected to the same fuel delivery means (not shown) via tubes or pipes, the fuel delivery means suitably being a pump, which in turn is connected to a fuel tank FT. Each fuel valve is provided with a respective nozzle 107, 109 for atomizing the fuel and inject the atomized fuel in the respective chamber. Although only one fuel valve is shown for each chamber, it is of course possible within the inventive idea to provide a plurality of nozzles.

In order to provide proper mixing inside the mixing reactor chamber 110 there is provided a channel CH for passing the gaseous mixture from the pre-heating chamber 112 to a turbulator 114 (only indicated). The turbulator can simply be an opening, aperture or orifice, or a plurality of openings/ apertures/ orifices forming an abrupt deflection of the gaseous flow, which creates turbulence.

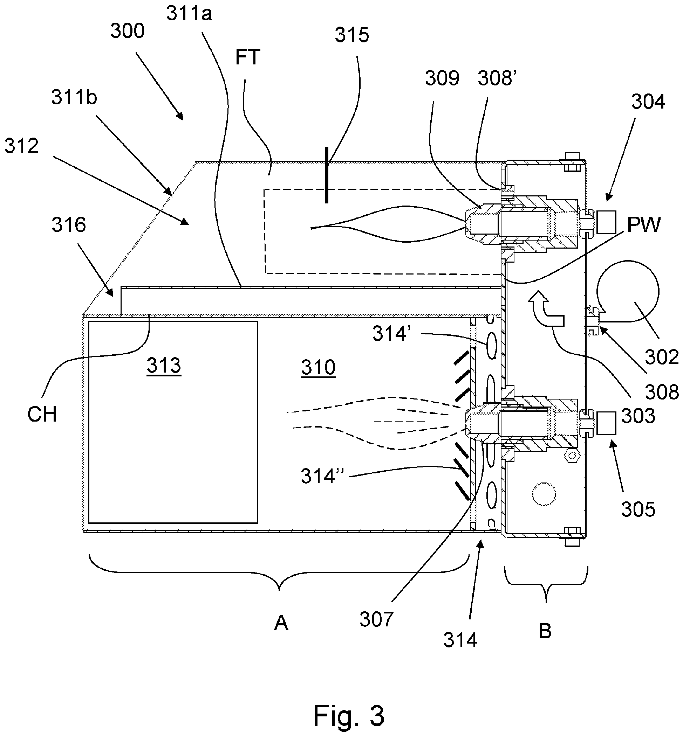

In Fig. 3 a specific and preferred embodiment of the invention is illustrated. Thus, a catalytic combustor generally designated 300 is shown. It has the same general constitution as the schematically shown combustor of Fig. 2b, and similar features are given the same reference numerals as in Fig. 2b, but with the prefix "30". However, there are some specific details that enhances the operation of the apparatus.

In order to provide for the pre-heating of the catalytic burner necessary for achieving the required temperature in operation, there is a partition member 311a arranged at least partly around the circumference of the catalytic reaction chamber 310, as shown, although it could also extend entirely around the circumference. It is attached to the partition wall PW at one end and leaves a preferably circumferential slit 316 at the opposite end such that the hot gases generated in the pre-heating compartment 312 will flow along the outer surface of the reaction chamber and heat it.

In a particular embodiment there is a dedicated flame tube FT (shown in dotted lines), essentially having a circular cross-section, provided in the pre-heating chamber 312. It is attached to the partition wall PW such that it surrounds the atomizing nozzle 309. The flame tube is preferably of a circular cross-section, although this is not strictly necessary. The size and shape of the flame tube FT is such that the flame at the opening of the tube is optimized for the combustor at hand. It will be a matter of constructive testing pertaining to the field of the skilled man, without any need for inventive work to optimize the flame tube.

The operation of the reactor system according to the invention will now be described with reference to the embodiment shown in Fig. 3.

For the embodiment shown in Fig. 3, the combustor is optimized for several operations, start-up, pre-heating and normal operation - all designed to minimize emissions and to optimize performance.

The system is started by blowing air into the system, by the air fan 302 (shown schematically in Fig. 3), the air 303 enters the combustor through the orifice 308, and enters the control compartment B, and then the air passes through the partition wall PW via a nozzle 308' and further through the entire reactor system, before exiting the reactor at the end of the catalyst 313. Ignition is achieved by opening the secondary fuel valve, schematically indicated at 304, whereby the fuel is atomized and fed into the reactor by a fuel nozzle 309. Then the ignition electrode 315 is energized, by which sparks are formed in the atomized fuel/air mixture.

When ignition is achieved the air fan, is adjusted to provide optimal conditions for the flame combustion used in the pre-heating process. The warm gases produced from the flame combustion passes through the pre-heating chamber 312, around the flame shield 311 and into the catalytic mixing reactor chamber 310, through the turbulator 314, before passing over the catalyst 313.

In the shown embodiment the turbulator 314 consists of a plurality of oval orifices 314' arranged around the periphery of the tubular reaction chamber 310.

The air is transferred from the turbulator 314 into the reaction chamber by means of a swirler in order to achieve a homogeneous mixture between air and fuel. The swirler comprises deflection elements 314" arranged circumferentially around a fuel nozzle 307 in the reaction chamber 310.

By allowing the combustion gases to pass over the entire interior of the system it is possible to quickly transfer the heat from the combustion to the reactor system, while at the same time preventing soot formed when starting of the pre-heating process, to reach the catalyst, as this soot is collected on the distal wall 311b in the pre-heating chamber 312 and will be burned away as the pre-heating process reaches the operational temperature.

When the desired temperature has been reached in catalytic mixing chamber 310, the secondary fuel valve 304 is closed; the air is then adjusted to the normal catalytic operation mode and the primary fuel valve 305 is opened and atomized fuel is injected by the fuel nozzle 307, into the main mixing chamber 310.

The heat produced in the pre-heating process is transferred from the reactor walls to the incoming air and by so it is possible to vaporize the fuel by mixing the fuel with the preheated air and transport the air/fuel mixture to the catalyst 313.

When the vaporized air-fuel mixture comes in contact with the catalyst 313, the catalytic combustion process starts and heat is produced directly in the catalyst. The heat produced in the catalyst 313, is used to both maintain heat in the mixing chamber 310, during operation and primarily to provide heat to external applications.

By operating the catalytic combustion at high air-to fuel ratios it is possible to eliminate nitrous oxides (NOx), carbon monoxide (CO) and other hydrocarbon emissions from the heater as well as to increase the efficiency of the heater enabling the design of a clean heater for both automotive and other mobile and stationary applications.

## Claims

1. A catalytic heater comprising a catalytic burner (310, 313) and a reactor for operating catalytic combustion of liquid fuels, comprising:
preheating means (308', 309, 315; FT) arranged to preheat the catalytic burner (310, 313);
primary fuel supply means (307) arranged to supply fuel to the catalytic burner (310, 313); wherein
the preheating means (308', 309, 315; FT) and the primary fuel supply means (307) are provided in separate compartments (310, 312), said compartments being connected with each other via a channel (CH);
wherein the primary fuel supply means (307) is arranged in a catalytic reactor chamber (310), and wherein the preheating means (308', 309, 315; FT) is arranged in a preheating compartment (312) arranged adjacent to said reactor chamber (310) and in heat transfer contact therewith; and
wherein said channel (CH) has
i) an inlet at an end of said preheating compartment (312) opposite to the end where the preheating means (308', 309, 315; FT) is arranged, and
ii) an outlet opening into the catalytic reaction chamber (310) at the end near said primary fuel supply means (307); wherein the heater comprises a distal wall (311b) **characterised in that** the distal wall (311b) is adapted for collecting soot formed when starting the preheating process to prevent soot from reaching the catalyst.

2. The catalytic heater as claimed in claim 1, wherein the preheating means (308', 309, 315; FT) comprises a preheating burner, having a fuel atomizing nozzle (309) and a secondary fuel supply means for feeding fuel to the preheating burner.

3. The catalytic heater as claimed in claim 1 or 2, further comprising a flame tube (FT) arranged around the preheating burner.

4. The catalytic heater as claimed in claim 2 or 3, wherein the primary fuel supply means (307) comprises a fuel atomizing nozzle.

5. The catalytic heater as claimed in any of claims 1-4, wherein the reaction chamber (310) further is provided with a plurality of orifices (314') arranged in the vicinity of the atomizing nozzle (307), the reaction chamber (310) preferably having a circular cross-section and said openings (314') preferably being arranged circumferentially.

6. The catalytic heater as claimed in claim 5, wherein the channel connecting the separate adjacent compartments is provided by a partition member (311b) attached to a partition wall (PW) arranged circumferentially around the reaction chamber (310) and having an extension essentially in parallel with the reaction chamber and a length such that there is formed an opening (316) at an end thereof at the opposite end from the partition wall (PW).

7. The catalytic heater as claimed in any preceding claim, further comprising an air inlet (308; 308') in the partition wall (PW) said inlet opening in to the pre-heating compartment (312).

8. The catalytic heater as claimed in any preceding claim, further comprising a catalyst bed (313) in the reaction chamber (310) at the distal end thereof.

## Patentansprüche

1. Katalytische Heizung, umfassend einen katalytischen Brenner (310, 313) und einen Reaktor zu dem Betreiben von katalytischer Verbrennung flüssiger Brennstoffe, umfassend:
ein Vorheizmittel (308', 309, 315; FT), das angeordnet ist, den katalytischen Brenner (310, 313) vorzuheizen;
ein primäres Brennstoffversorgungsmittel (307), das angeordnet ist, den katalytischen Brenner (310, 313) mit Brennstoff zu versorgen; wobei
das Vorheizmittel (308', 309, 315; FT) und das primäre Brennstoffversorgungsmittel (307) in gesonderten Fächern (310, 312) vorgesehen sind, wobei die Fächer über einen Kanal (CH) miteinander verbunden sind;
wobei das primäre Brennstoffversorgungsmittel (307) in einer katalytischen Reaktorkammer (310) angeordnet ist und wobei das Vorheizmittel (308', 309, 315; FT) in einem Vorheizfach (312) angeordnet ist, das zu der Reaktorkammer (310) benachbart angeordnet und mit dieser in Hitzeübertragungskontakt ist; und
wobei der Kanal (CH) Folgendes aufweist:
i) einen Einlass an einem Ende des Vorheizfachs (312) gegenüber dem Ende, an dem das Vorheizmittel (308', 309, 315; FT) angeordnet ist, und
ii) eine Auslassöffnung in die katalytische Reaktionskammer (310) an dem Ende nahe dem primären Brennstoffversorgungsmittel (307);
wobei
die Heizung eine distale Wandung (311b) umfasst, **dadurch gekennzeichnet, dass** die distale Wandung (311b) angepasst ist, Ruß zu sammeln, der sich bildet, wenn der Vorheizprozess beginnt, um den Ruß daran zu hindern, den Katalysator zu erreichen.

2. Katalytische Heizung
nach Anspruch 1, wobei das Vorheizmittel (308', 309, 315; FT) einen Vorheizbrenner, der eine Brennstoffzerstäuberdüse (309) aufweist, und ein sekundäres Brennstoffversorgungsmittel zu dem Speisen des Brennstoffs in den Vorheizbrenner umfasst.

3. Katalytische Heizung
nach Anspruch 1 oder 2, weiter umfassend ein Flammrohr (FT), das um den Vorheizbrenner angeordnet ist.

4. Katalytische Heizung
nach Anspruch 2 oder 3, wobei das primäre Brennstoffversorgungsmittel (307) eine Brennstoffzerstäuberdüse umfasst.

5. Katalytische Heizung
nach einem der Ansprüche 1 bis 4, wobei die Reaktionskammer (310) weiter mit einer Vielzahl von Mündungen (314') bereitstellen ist, die in der näheren Umgebung der Zerstäuberdüse (307) angeordnet sind, wobei die Reaktionskammer (310) vorzugsweise einen kreisförmigen Querschnitt aufweist und die Öffnungen (314') vorzugsweise in Umfangsrichtung angeordnet sind.

6. Katalytische Heizung
nach Anspruch 5, wobei der Kanal, der die gesonderten benachbarten Fächer verbindet, durch ein Trennelement (311b) bereitgestellt ist, das an einer Trennwandung (PW) befestigt ist, die in Umfangsrichtung um die Reaktionskammer (310) angeordnet ist und eine Erstreckung in dem Wesentlichen parallel zu der Reaktionskammer sowie eine derartige Länge aufweist, dass eine Öffnung (316) an deren einem Ende an dem gegenüberliegenden Enden der Trennwandung (PW) ausgebildet ist.

7. Katalytische Heizung
nach einem der vorstehenden Ansprüche, weiter umfassend einen Lufteinlass (308; 308') in der Trennwandung (PW), wobei sich die Einlassöffnung in das Vorheizfach (312) öffnet.

8. Katalytische Heizung
nach einem der vorstehenden Ansprüche, weiter umfassend ein Katalysatorbett (313) in der Reaktionskammer (310) an deren distalem Ende.

## Revendications

1. Appareil de chauffage catalytique comprenant un brûleur catalytique (310, 313) et un réacteur pour opérer une combustion catalytique de combustibles liquides, comprenant :
un moyen de préchauffage (308', 309, 315 ; FT) agencé pour préchauffer le brûleur catalytique (310, 313) ;
un moyen d'alimentation en combustible primaire (307) agencé pour alimenter en combustible le brûleur catalytique (310, 313) ; dans lequel
le moyen de préchauffage (308', 309, 315 ; FT) et le moyen d'alimentation en combustible primaire (307) sont prévus dans des compartiments séparés (310, 312), lesdits compartiments étant reliés les uns aux autres via un canal (CH) ;
dans lequel le moyen d'alimentation en combustible primaire (307) est agencé dans une chambre de réacteur catalytique (310), et dans lequel le moyen de préchauffage (308', 309, 315 ; FT) est agencé dans un compartiment de préchauffage (312) disposé adjacent à ladite chambre de réacteur (310) et en contact de transfert de chaleur avec celle-ci ; et
dans lequel ledit canal (CH) présente
i) une entrée au niveau d'une extrémité dudit compartiment de préchauffage (312) à l'opposé de l'extrémité où le moyen de préchauffage (308', 309, 315 ; FT) est agencé, et
ii) une sortie s'ouvrant dans la chambre de réaction catalytique (310) au niveau de l'extrémité près dudit moyen d'alimentation en combustible primaire (307) ;
dans lequel
l'appareil de chauffage comprend une paroi distale (311b) **caractérisé en ce que** la paroi distale (311b) est adaptée pour recueillir de la suie formée lors d'un démarrage du processus de préchauffage pour empêcher la suie d'atteindre le catalyseur.

2. Appareil de chauffage catalytique selon la revendication 1, dans lequel le moyen de préchauffage (308', 309, 315 ; FT) comprend un brûleur de préchauffage, présentant une buse de pulvérisation de combustible (309) et un moyen d'alimentation en combustible secondaire pour alimenter en combustible le brûleur de préchauffage.

3. Appareil de chauffage catalytique selon la revendication 1 ou 2, comprenant en outre un tube à flamme (FT) agencé autour du brûleur de préchauffage.

4. Appareil de chauffage catalytique selon la revendication 2 ou 3, dans lequel le moyen d'alimentation en combustible primaire (307) comprend une buse de pulvérisation de combustible.

5. Appareil de chauffage catalytique selon l'une quelconque des revendications 1-4, dans lequel la chambre de réaction (310) est munie en outre d'une pluralité d'orifices (314') agencés au voisinage de la buse de pulvérisation (307), la chambre de réaction (310) ayant de préférence une section transversale circulaire et lesdites ouvertures (314') étant de préférence agencées circonférentiellement.

6. Appareil de chauffage catalytique selon la revendication 5, dans lequel le canal reliant les compartiments adjacents séparés est fourni par un élément de séparation (311b) fixé à une paroi de séparation (PW) agencée circonférentiellement autour de la chambre de réaction (310) et présentant une extension essentiellement en parallèle de la chambre de réaction et une longueur telle qu'une ouverture (316) est formée à une extrémité de celle-ci au niveau de l'extrémité opposée de la paroi de séparation (PW).

7. Appareil de chauffage catalytique selon une revendication précédente quelconque, comprenant en outre une entrée d'air (308 ; 308') dans la paroi de séparation (PW) ladite entrée s'ouvrant dans le compartiment de préchauffage (312).

8. Appareil de chauffage catalytique selon une revendication précédente quelconque, comprenant en outre un lit de catalyseur (313) dans la chambre de réaction (310) au niveau de l'extrémité distale de celle-ci.
